**Europäisches Patentamt**

**European Patent Office**

**Office européen des brevets**

(19)

(11) Veröffentlichungsnummer: **0 017 192**
**A1**

(12) # EUROPÄISCHE PATENTANMELDUNG

(21) Anmeldenummer: **80101676.7**

(22) Anmeldetag: **28.03.80**

(51) Int. Cl.³: **C 02 F 1/40**
**B 01 D 17/02**

(30) Priorität: **29.03.79 DE 2912460**

(43) Veröffentlichungstag der Anmeldung:
**15.10.80 Patentblatt 80/21**

(84) Benannte Vertragsstaaten:
**AT BE CH FR GB IT LU NL SE**

(71) Anmelder: **Crema, Erhard**
**Leuchte 96**
**D-6000 Frankfurt/Main (Bergen-Enkheim)(DE)**

(72) Erfinder: **Crema, Erhard**
**Leuchte 96**
**D-6000 Frankfurt/Main (Bergen-Enkheim)(DE)**

(74) Vertreter: **Strasse, Joachim, Dipl.-Ing. et al,**
**Zweibrückenstrasse 15**
**D-8000 München 2(DE)**

(54) **Verfahren und Vorrichtung zum Abscheiden von Öl aus einem Öl-Wasser-Gemisch.**

(57) Um Öl aus einem Öl-Wasser-Gemisch abzuscheiden und um bei dem zurückgewonnenen Wasser den Verschmutzungsgrad so zu reduzieren, daß eine Umweltbelastung nicht erfolgt, wird das Gemisch vorzugsweise über mehrere unter einem spitzen Winkel zueinander verlaufende, mit einem Öl abweisenden Vlies (30) versehene, in einem Gehäuse (12) angeordnete schiefe Ebenen (18, 20, 22, 24) geleitet. Dabei dringt das Wasser durch das Vlies und wird jeweils am tiefsten Punkt einer jeden Ebene einer Sammeleinrichtung (34, 36, 38, 40, 42) zugeführt, wohingegen das Öl oberhalb des Vlieses am tiefsten Punkt der untersten Ebene (24) gesammelt wird.

EP 0 017 192 A1

./...

Croydon Printing Company Ltd.

FIG.1

STRASSE & STOFFREGEN

Patentanwälte

Dipl.-Ing. Joachim Strasse, München · Dipl.-Phys. Dr. Hans-Herbert Stoffregen, Hanau

Vertreter beim Europäischen Patentamt · Professional representatives before the European Patent Office

Zweibrückenstraße 15
D - 8000 München 2
(Gegenüber dem Patentamt)
Telefon (089) 22 25 96
T e l e x  5 22 054

Am Markt 11, Postfach 2144
D - 6450 Hanau 1
Telefon (06181) 2 43 83
T e l e x  4 184 782

– 1 –

Verfahren und Vorrichtung zum Abscheiden von Öl aus einem Öl-Wasser-Gemisch

Die Erfindung bezieht sich auf ein Verfahren und eine Vorrichtung zum Abscheiden von Öl aus einem Öl-Wasser-Gemisch, welches vorzugsweise mittels einer durch einen geschlossenen Kreislauf betreibbaren Wasserstrahlpumpe in einem von dem Kreislauf getrennten Auffangbehälter sammelbar ist.

Durch ein verstärktes Umweltbewußtsein ist man mehr und mehr bemüht, nach Möglichkeiten zu suchen, wie zum Beispiel mit Öl verschmutztes Wasser gereinigt werden kann, damit zum Beispiel bei einem Wasserschaden in einem Heizungsraum die Kanalisation oder bei einer Ölverschmutzung eines Flusses oder eines Sees die Biologie der Gewässer nicht unnötig belastet wird.

So sind zum Beispiel Vorrichtungen bekannt, mit denen der größte Teil von mit Öl vermischtem Wasser aus zum Beispiel Kellerräumen abgesaugt werden kann. Dazu wird vorzugsweise mit Hilfe einer Kreiselpumpe das Öl-Wasser-Gemisch durch die Pumpe angesaugt und einem Behälter zugeführt. Da das Öl-Wasser-Gemisch bei diesen Vorrichtungen mit den drehenden Teilen der Pumpe in Berührung kommt, entsteht eine Emulsion, wodurch ein nachträgliches Trennen des Öls von dem Wasser nahezu unmöglich wird. Demzufolge müssen auch bei geringen Ölverschmutzungen große Mengen von Wasser zunächst von dem Verschmutzungsort wegtransportiert und anschließend vernichtet werden. Bei Ölverschmutzungen auf Gewässern müssen gleichfalls nicht unerhebliche Mengen von Wasser abgepumpt werden, die dem Fluß beziehungsweise dem See nicht wieder zugeführt werden können, da das Öl aus dem Öl-Wasser-Gemisch nicht entfernt werden kann, selbst wenn ein geringer Verschmutzungsgrad, der jedoch die zulässigen Höchstwerte überschreitet, vorliegt.

Es gibt zwar Vorrichtungen, bei denen das Öl-Wasser-Gemisch mit den drehenden Teilen einer Pumpe nicht in Berührung kommt. So ist zum Beispiel gemäß dem DE-GM 17 81 835 eine Wasserstrahlpumpe zu entnehmen, mit Hilfe der ohne weiteres ein Öl-Wasser-Gemisch abgepumpt werden kann. Da das abgesaugte Gemisch jedoch

dem Wasserkreislauf zur Betätigung der Wasserstrahlpumpe während des Absaugvorgangs beigemischt wird, ist dadurch gleichfalls nicht die Möglichkeit gegeben, zum Beispiel auf Seen oder Flüssen einen offenen Kreislauf mit dem Gewässer einzurichten, mit Hilfe dessen die Wasserstrahlpumpe betreibbar wäre.

Erstmalig ist es mit Hilfe der in der Deutschen Patentanmeldung 27 58 038.7 offenbarten Vorrichtung möglich, ein Öl-Wasser-Gemisch in einem Auffangbehälter mit Hilfe einer Wasserstrahlpumpe einzubringen, ohne daß der Wasserkreislauf zur Betätigung der Wasserstrahlpumpe mit dem verschmutzten Wasser in Berührung kommt.

Es ist daher Aufgabe der vorliegenden Erfindung, aus einem Öl-Wasser-Gemisch das Öl abzuscheiden, um das gesäuberte Wasser ohne Gefahr einer Umweltverschmutzung zum Beispiel einer Kanalisation oder einem See oder einem Fluß wieder zuführen zu können. Dadurch soll der Vorteil erzielt werden, daß bei Ölverschmutzungen eine im Vergleich zum ausgelaufenen Öl nur geringe Wassermenge mitvernichtet werden muß.

Ein Vorschlag zur Lösung dieser Aufgabe wird durch ein Verfahren verwirklicht, das sich dadurch auszeichnet, daß das Öl-Wasser-Gemisch über zumindest eine mit einem Öl abweisenden Vlies versehene schiefe Ebene läuft, um unterhalb der Ebene das Wasser und oberhalb der Ebene das abgeschiedene Öl zurückzugewinnen. Dadurch eröffnet sich die Möglichkeit, daß ausschließlich das abgeschiedene Öl in einem Behälter gesammelt werden muß, um es zu deponieren oder zu vernichten. Das zurückgewonnene Wasser kann ohne Schwierigkeiten einer Kanalisation oder einem offenen Gewässer zugeführt werden, ohne daß zu befürchten ist, daß eine zu hohe Umweltbelastung erfolgt. Vorzugsweise wird das Öl-Wasser-Gemisch jedoch nicht nur über eine schiefe Ebene geschickt, sondern über mehrere unter einem spitzen Winkel zueinander und übereinander angeordnete Ebenen. In einem solchen Fall können die verschiedenen Ebenen an einem Gehäuse angeordnet sein und sich in ihren Endbereichen überlappen. Dies hat den Vorteil, daß stets das von einer Ebene abfließende Öl-Wasser-Gemisch beziehungsweise abgeschiedene Öl vollständig auf die darunter angeordnete Ebene gelangt. Das von den einzelnen Ebenen abgeschiedene Öl beziehungsweise Wasser wird jeweils einem Auslaß zugeführt.

Die Aufgabe kann jedoch auch dadurch gelöst werden, daß durch ein im oberen Randbereich des Sammelbehälters angeordnetes Wasser abweisendes und Öl durchlassendes Vlies mittels einer bekannten Faßpumpe in Form von zum Beispiel einer Kolbenpumpe das Öl abgepumpt wird.

Dieser Vorschlag hat den Vorteil, daß das in dem Sammelbehälter gewonnene Öl-Wasser-Gemisch nicht einer Extra-Vorrichtung zugeführt werden muß, sondern daß einzig und allein ein Vlies derart in den oberen Bereich des gefüllten Behälters eingebracht werden muß, daß das Öl durch diesen hindurchtritt und von der erwähnten Pumpe abgesaugt werden muß.

Gemäß der Erfindung kann der zuerst genannte Verfahrensvorschlag durch eine Vorrichtung verwirklicht werden, die dadurch gekennzeichnet ist, daß zur Aufnahme und zum Abfließen des Öl-Wasser-Gemisches zumindest eine mit Ausnehmungen versehene schiefe Ebene mit einem tropfnassen ölabweisenden Vlies versehen ist und daß das aus dem Wasser abgeschiedene Öl und das Wasser jeweils einer getrennten Auslaßöffnung im Bereich des unteren Endes der schiefen Ebene zuführbar sind. Vorzugsweise zeichnet sich die erfindungsgemäße Vorrichtung dadurch aus, daß mehrere unter einem spitzen Winkel zueinander verlaufende mit dem ölabweisenden Vlies versehene schiefe Ebenen übereinander in einem Gehäuse derart angeordnet sind, daß das Öl-Wasser-Gemisch beziehungsweise das abgeschiedene Öl von Ebene zu Ebene fließt, daß das durch das Vlies hindurchgetretene Wasser am tiefsten Punkt einer jeden Ebene einer Sammeleinrichtung zum Ableiten an eine Auslaßöffnung zuführbar ist und daß im tiefsten Punkt der untersten Ebene das abgeschiedene Öl gesammelt und abführbar ist. Entsprechend einer Ausgestaltung der Erfindung wird die Ebene von unten von einem Behälter zum Auffangen des Wassers umgeben und weist jeweils im Bereich des tiefsten Punktes eine Öffnung auf, die mit vertikal verlaufenden Schächten verbunden ist, durch die das Wasser einem geneigten Nachfilter zuführbar ist, dessen Neigungswinkel gegenüber denen der Ebenen um $90^{\circ}$ gedreht ist, und daß das Wasser nach Durchdringen des Nachfilters der Auslaßöffnung zuführbar ist. Sollte durch das Nachfiltern weiteres Öl abgeschieden werden, so kann dieses vorzugsweise in einer Sammelrinne aufgefangen werden. Die Neigung jeder Ebene soll nach der Erfindung zwischen $1^{\circ}$ und $4^{\circ}$, vorzugsweise $2^{\circ}$ gegenüber der Horizontalen liegen. Um die gewünschte Neigung der Ebenen beziehungsweise des Nachfilters zu erzielen, ist das gesamte Gehäuse höhenverstellbar ausgebildet. Um das Öl-Wasser-Gemisch auf einfache Weise ohne Gefahr eines Verschüttens der erfindungsgemäßen Vorrichtung zuzuführen, weist die Gehäuse-Oberseite einen Ansatzstutzen für eine Verbindung mit dem Auffangbehälter auf.

Der alternative Verfahrensvorschlag kann mit einer Vorrichtung durchgeführt werden, die sich dadurch auszeichnet, daß der Sammelbehälter im oberen Randbereich einen trichterförmigen, Ausnehmungen aufweisenden, bei gefülltem Sammelbehälter in das Gemisch eintauchenden Einsatz aufweist, der behälterinnenseitig mit einem wasserabweisenden und öldurchlassenden Vlies versehen ist, und daß ein Saugrohr einer Pumpe zum Absaugen des Öls im Abstand zum tiefsten Punkt des trichterförmigen Einsatzes angeordnet ist. Vorzugsweise ist der Einsatz mit einem als Verschluß für den Behälter geeigneten Deckel versehen, in dem mittig oberhalb des trichterförmigen Einsatzes die vorzugsweise von Hand zu betätigende Pumpe angeordnet ist. Der Sammelbehälter selbst sollte ein Normfaß sein.

Die Vorrichtung für den zweiten Lösungsvorschlag zeigt die Vorteile, daß keine aufwendigen zusätzlichen Geräte angeschafft werden müssen, um eine Trennung des Öls von dem Öl-Wasser-Gemisch herbeizuführen. Einzig und allein der trichterförmige Einsatz, der vorzugsweise die Form eines in das Behälterinnere ragenden Kegelstumpfabschnitts auf-

- 8 -

weist, wird benötigt, um Öl durch das an der dem Behälterinneren zugewandten Oberfläche des Einsatzes angebrachte Vlies hindurchzusaugen und mit der erwähnten Pumpe abzupumpen. Die Handpumpe kann dabei mittig in einem Deckelaufsatz angeordnet sein, der zum einen als Verschluß des Sammelbehälters dient und zum anderen mit dem trichterförmigen Einsatz über Stege starr verbunden ist.

Weitere Einzelheiten, Vorteile und Merkmale der Erfindung ergeben sich aus der nachfolgenden Beschreibung der Zeichnung.

Es zeigen:

Fig. 1   eine schematische perspektivische Darstellung einer Vorrichtung zum Abscheiden von Öl, teilweise mit herausgebrochenem Teil und

Fig. 2   ein weiteres Ausführungsbeispiel einer Vorrichtung zum Abscheiden von Öl, ebenfalls teilweise mit herausgebrochenem Teil.

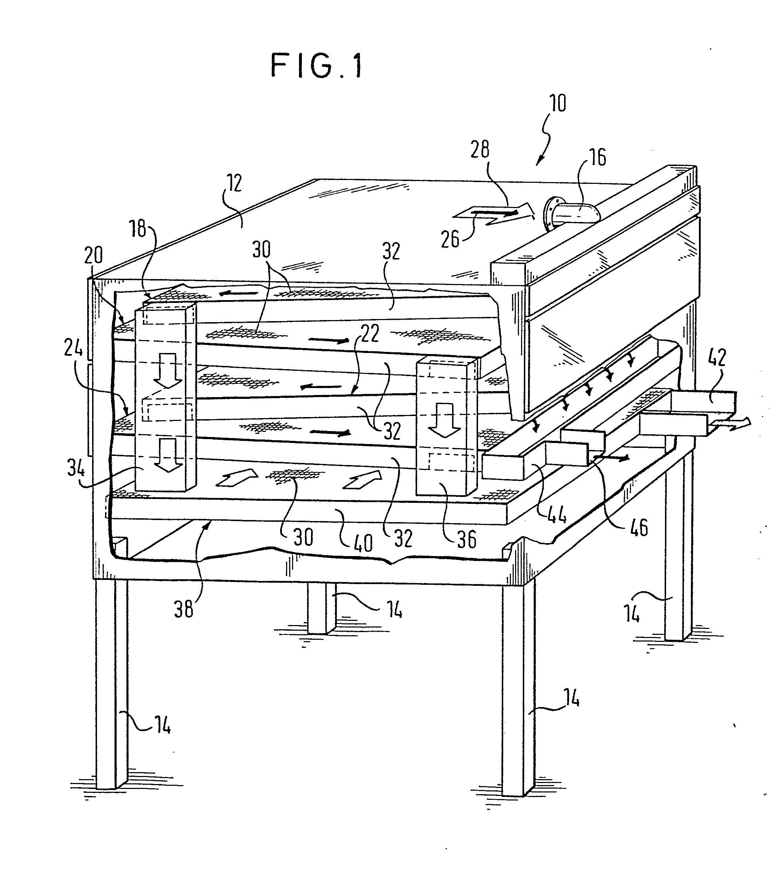

In Fig. 1 ist ein erstes Ausführungsbeispiel einer Vorrichtung 10 dargestellt, mit Hilfe derer aus einem Öl-Wasser-Gemisch das Öl vom Wasser derart getrennt werden kann, daß das wiedergewonnene Wasser weiterverwendet werden kann, so daß es zum Beispiel einer Kanalisation oder freien Gewässern ohne die Gefahr einer Umweltverschmutzung wieder zugeführt werden kann.

Die Vorrichtung 10 besteht aus einem Gehäuse 12, welches von vier höhenverstellbar angeordneten Füßen 14 getragen wird. Um ein horizontales Austarieren des Gehäuses 12 zu ermöglichen, können vorzugsweise nicht dargestellte Wasserlibellen angeordnet sein, die ein Justieren erleichtern. An der oberen Fläche des Gehäuses 12 befindet sich eine Einlaßöffnung 16, die vorzugsweise so ausgebildet ist, daß sie mit einem Sammelbehälter über eine Kupplung verbunden werden kann, in dem das Öl-Wasser-Gemisch mittels einer Wasserstrahlpumpe angesaugt worden ist, wobei der Wasserkreislauf zum Betätigen der Wasserstrahlpumpe von dem Sammelbehälter getrennt ist. Wird nun das Öl-Wasser-Gemisch durch die Einlaßöffnung 16 in das Gehäuse gefüllt, so fließt es über übereinander angeordnete unter einem spitzen Winkel zueinander verlaufende Ebenen 18 bis 24. Auch wenn im Ausführungsbeispiel nur vier Ebenen dargestellt sind, so kann die Vorrichtung selbstverständlich mit weniger oder auch mit mehr Ebenen ausgestaltet sein. Die Ebenen 18, 20, 22, 24 sind derart überlappend angeordnet, daß der obere Bereich einer unteren Ebene über den unteren Bereich einer oberen Ebene vorsteht. Dadurch ist sichergestellt, daß das von einer Ebene kommende Öl-Wasser-Gemisch oder bereits abgeschiedene Öl vollständig auf die nächste Ebene gelangen kann.

Um ein Abscheiden überhaupt zu ermöglichen, müssen jedoch die Ebenen mit einem Wasser durchlässigen und Öl abweisenden Vlies 30 überdeckt sein. Gleichzeitig muß die Ebene Ausnehmungen aufweisen, damit das Wasser hindurchdringen kann. Vorzugsweise ist daher die Ebene als Lochblech ausgebildet. Des weiteren befindet sich unter einer jeden Ebene ein geschlossener Kasten 32, in dem das Wasser gesammelt werden kann.

Zwei Schächte 34 und 36 sind an den Enden der Längsseiten der Ebenen 18 bis 24 angeordnet, die zueinander einen Winkel beschreiben. Die Schächte 34 und 36 sind sodann mit den unterhalb der Ebenen angeordneten Behältern 32 verbunden, um das darin gesammelte Wasser einem Nachfilter 38 zuzuführen, der unterhalb der Ebenen 18 bis 24 angeordnet ist. Die Schächte 34 und 36 sind dabei jeweils mit den untersten Punkten der Behälter 32 verbunden, um ein gutes Abfließen des gesammelten Wassers zu gewährleisten. Im Ausführungsbeispiel nach Fig. 1 ist daher der Schacht 34 mit dem Sammelbehälter der ersten Ebene 18 und der dritten Ebene 22 und der Schacht 36 mit den Sammelbehältern 32 der zweiten Ebene 20 und der vierten Ebene 24 verbunden. Das aus den Schächten 34 und 36 fließende Wasser wird dann dem Nachfilter 38 zugeführt, dessen Neigung gegenüber den Neigungen der Ebenen 18 bis 24 um 90$^{o}$ gedreht ist. Auch der Nachfilter 38 ist demzufolge aus einer schrägen Ebene aufgebaut, über die ein Wasser durchlassendes und Öl abweisendes Vlies gespannt ist. Unterhalb dieses Vlieses ist zur Stützung gleichfalls eine Lochplatte angeordnet, um das durchtretende Wasser einem Sammelbehälter 40 zuzuführen. Der Sammelbehälter 40 ist dann mit einer Auslaßöffnung 42 verbunden, durch die das gereinigte Wasser entnommen werden kann. Das von den auf den Ebenen 18 bis 24 abgewiesene Öl fließt gemäß der Vorrichtung nach Fig. 1 über sämtliche Ebenen, um einer Sammelrinne 44 am unteren Ende der untersten Ebene 24 zugeführt zu werden, die wiederum mit einer Auslaßöffnung 46 verbunden ist. Von dem Auslaß 46 kann das Öl dann in einen Transportbehälter abgefüllt werden, um das Öl zu vernichten beziehungsweise zu deponieren.

In Fig. 1 ist der Verlauf des Wassers beziehungsweise des Öls schematisch dadurch angedeutet, daß dem Öl ein voll ausgefüllter Pfeil 26 und dem Wasser ein offener Pfeil 28 zugeordnet wird. Zu Beginn des Abscheidevorganges ist der Einfüllstutzen 16 - wie erwähnt - vorzugsweise mit dem nicht dargestellten Sammelbehälter verbunden, so daß das Gemisch über die Ebenen 18 bis 24 beziehungsweise den Nachfilter 38 fließen kann. Bevor jedoch das Gemisch der Vorrichtung zugeführt wird, muß darauf geachtet werden, daß das Wasser durchlassende und Öl abweisende Vlies tropfnaßgetränkt ist. Als Vlies kann zum Beispiel das von der Firma Enka, Wuppertal, vertriebene Vlies SH 45 benutzt werden.

Nachdem das Öl-Wasser-Gemisch der Vorrichtung 10 zugeführt wird, kann bereits auf der ersten Ebene Wasser das Vlies durchdringen und in dem Sammelbehälter 32 gesammelt und dem Schacht 34 zugeführt werden. Sollte ein hoher Verschmutzungsgrad des Wassers vorliegen, so kann der Fall auftreten, daß das Vlies der ersten schiefen Ebene 18 schnell zugesetzt wird. Das

- 13 -

beeinträchtigt jedoch nicht die Funktionsfähigkeit der Vorrichtung, da die nächste Ebene 20 die gleiche Aufgabe erfüllt, also das Wasser dem unterhalb der Ebene angeordneten Sammelbehälter zuführt und das Öl über das Vlies laufen läßt. Sollte einmal das den Sammelbehältern 32 zu entnehmende Wasser, das über die Schächte 34 und 36 abgeführt wird, noch Öl enthalten, so wird mittels des Nachfilters 38 auch das Restöl abgeschieden. Aus diesem Grund münden die Schächte 34 und 36 an der oberen Kante des ebenfalls eine Neigung aufweisenden Nachfilters 38, der entsprechend der schiefen Ebene 18 bis 24 aufgebaut ist, also an der Oberfläche ein ölabweisendes Vlies aufweist, das vorzugsweise auf einer Lochplatte angeordnet ist, um das durchgetretene Wasser in einem Sammelbehälter 40 auffangen zu können. Da von dem Nachfilter 38 nur ein sehr geringer Anteil von Öl zu entnehmen ist, genügt es, daß an der unteren Kante des Nachfilters 38 eine nicht dargestellte Sammelrinne für das Öl angeordnet wird. Eine spezielle, fortwährend zu betätigende Abflußeinrichtung ist nicht erforderlich. Nachdem das Öl sämtliche Ebenen 18 bis 24 überstrichen hat, gelangt es in die Sammelrinne 44, um, wie bereits geschildert, der Auslaßöffnung 46 zugeführt zu werden.

Mit Hilfe der erfindungsgemäßen Vorrichtung gemäß Fig. 1 ist es erstmals möglich geworden,

- 14 -

aus einem Öl-Wasser-Gemisch das Öl mit der Zuverlässigkeit abzuscheiden, daß das gereinigte Wasser wieder verwendbar ist. Die dazu verwendete Vorrichtung ist erkennbar einfach in der Konstruktion aufgebaut und daher kostengünstig herzustellen. Auch ist die Vorrichtung 10 transportabel ausgebildet, so daß an Unfallorten ohne Schwierigkeiten ein Einsatz möglich ist. Ein optimales Abscheiden des Öls hat sich dann ergeben, wenn der Neigungswinkel einer jeden Ebene 18 bis 24 gegenüber der Horizontalen $2^O$ beträgt. Versuche bei denen die einer Ebene nachfolgende Ebene einen stärkeren Neigungswinkel zeigt, liefen gleichfalls zur vollsten Zufriedenheit. Dabei kann zum Beispiel die erste Ebene einen Neigungswinkel von $1,8^O$, die zweite einen Neigungswinkel von $2^O$, die dritte einen um $0,4^O$ erhöhte Neigung etc. aufweisen. In Ausgestaltung der Erfindung könnten die Ebenen in ihrer Neigung auch individuell eingestellt werden, um beim Abscheiden des Öls eine Optimierung zu erzielen.

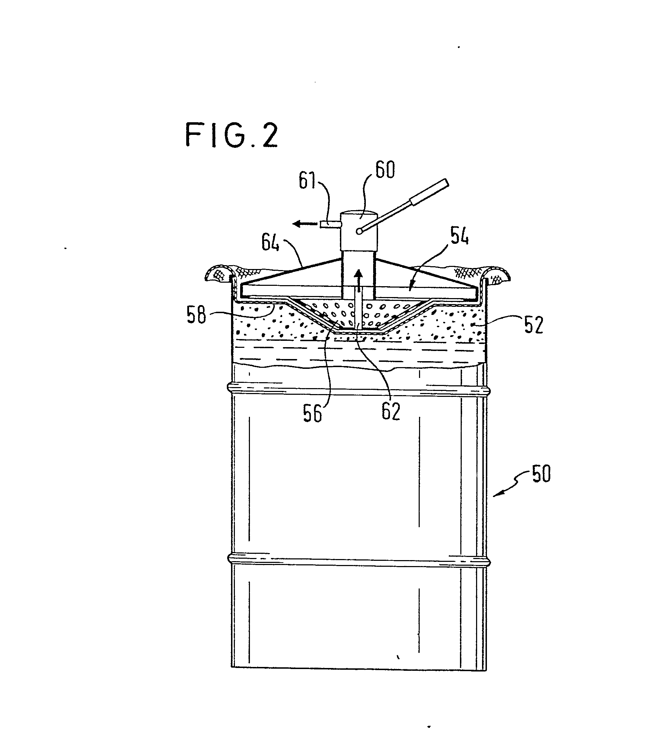

In Fig. 2 ist ein Alternativ-Vorschlag schematisch dargestellt, mit Hilfe dessen ebenfalls aus einem Öl-Wasser-Gemisch Öl zurückgewonnen werden kann, so daß das gereinigte Wasser nur noch einen zulässigen Ver-

- 15 -

schmutzungsgrad aufweist.

Gemäß dem Ausführungsbeispiel nach Fig. 2 wird das Öl-Wasser-Gemisch in einen Sammelbehälter 50 gefüllt, der bereits beim Ansaugen des Öl-Wasser-Gemisches mit Hilfe der eingangs erwähnten Wasserstrahlungspumpe eingesetzt wurde. Nachdem der Sammelbehälter 50 mit dem Öl-Wasser-Gemisch gefüllt ist, läßt man das Öl ein wenig absetzen, so daß sich im oberen Bereich ausschließlich das Öl-Wasser-Gemisch 52 und darunter einen geringen Verschmutzungsgrad aufweisendes Wasser befindet.

Um nun aus dem Öl-Wasser-Gemisch 52 das Öl, welches durch schwarze Punkte dargestellt ist, abzusaugen, wird ein Einsatz 54 im Randbereich eingesetzt. Der Einsatz 54 ist trichterförmig ausgebildet und hat im Querschnitt vorzugsweise die Form eines an einer Basis angeordneten Kegelstumpfes, dessen verjüngtes Ende 56 in den Behälter 50 hineinragt. Die dem Behälter im Inneren zugewandte Fläche des Einsatzes 54 ist des weiteren mit einem Wasser abweisenden und Öl durchlassenden Vlies bespannt. Bei dem Vlies kann es sich um einen handelsüblichen Vlies der Firma Enka, Wuppertal, handeln, der unter der Bezeichnung "SL 45" vertrieben wird. Damit das Öl durch das Vlies 58 hindurchdringen kann, ist die entsprechende Fläche des Einsatzes 54 mit Ausnehmungen versehen. Um hinreichend viel Öl durch das Vlies hindurchdringen zu lassen, befindet sich oberhalb des Einsatzes 54 eine gewöhnliche Faßpumpe 60, wie zum Beispiel eine handbetätigte Kolbenpumpe, deren Saugrohr 62 in den Bereich des maximal in den Behälter 50 hineinragenden Teil des Einsatzes 54 angeordnet ist. Durch Betätigen der Pumpe 60 wird dann Öl über eine Auslaßöffnung 61 abgepumpt, so daß weiteres Öl aus dem Öl-Wasser-Gemisch 52 des Behälters 50 in den Bereich des Saugrohrs 62 gelangen kann.

Vorzugsweise ist die Pumpe 60 in einem deckelartigen Aufsatz 64 angeordnet, der gleichzeitig als Abschluß des Behälters 50 dient. Der deckelartige Aufsatz 64 ist auch zum Beispiel über Stege mit dem Einsatz 54 verbunden.

Mit Hilfe der Vorrichtung nach Fig. 2 wird der Vorteil erzielt, daß keine besondere Apparatur transportiert werden muß, um zum Beispiel aus einem Öl-Wasser-Gemisch das Öl abzuscheiden. Es genügt, daß man den deckelartigen Abschluß 64 mit dem angeflanschten Einsatz 54 bei sich führt, was erkennbar keine Schwierigkeiten bereitet, da dieser im Zusammenhang mit dem zu transportierenden Sammelbehälter 50 aufbewahrt und somit auch gemeinsam transportiert werden kann.

- 1 -

Verfahren und Vorrichtung zum Abscheiden von
Öl aus einem Öl-Wasser-Gemisch

Patentansprüche

1. Verfahren zum Abscheiden von Öl aus einem Öl-Wasser-Gemisch, welches vorzugsweise mittels einer durch einen geschlossenen Kreislauf betreibbaren Wasserstrahlpumpe in einem von dem Kreislauf getrennten Auffangbehälter sammelbar ist, d a d u r c h g e k e n n z e i c h n e t, daß das Öl-Wasser-Gemisch über zumindest eine mit einem Öl abweisenden Vlies (30) versehene schiefe Ebene (18 bzw. 20 bzw. 22 bzw. 24) läuft, um unterhalb der Ebene das Wasser und oberhalb der Ebene das abgeschiedene Öl zurückzugewinnen.

2. Verfahren nach Anspruch 1, d a d u r c h g e k e n n z e i c h n e t, daß das Öl-Wasser-Gemisch über mehrere unter einem spitzen Winkel zueinander verlaufende mit dem das Öl abweisenden Vlies

C017192

(30) versehene Ebenen (18, 20, 22, 24) läuft, wobei das dem Vlies (30) der jeweiligen Ebene durchdringende Wasser einem ersten Auslaß (42) und das über sämtliche Vliese laufende Öl einem zweiten Auslaß (46) zugeführt wird.

3. Verfahren zum Abscheiden von Öl aus einem Öl-Wasser-Gemisch, welches vorzugsweise mittels einer durch einen geschlossenen Kreislauf betreibbaren Wasserstrahlpumpe in einem von dem Kreislauf getrennten Auffangbehälter sammelbar ist, d a d u r c h   g e k e n n z e i c h n e t, daß durch ein im oberen Randbereich des Sammelbehälters (50) angeordnetes Wasser abweisendes und Öl durchlassendes Vlies (58) mittels einer Faßpumpe (60) das Öl abgepumpt wird.

4. Vorrichtung zur Durchführung des Verfahrens nach Anspruch 1 und/oder Anspruch 2 zum Abscheiden von Öl aus einem Öl-Wasser-Gemisch, welches mittels einer durch einen geschlossenen Kreislauf betreibbaren Wasserstrahlpumpe in einem vom Kreislauf ge-

- 3 -

trennten Auffangbehälter sammelbar ist, d a d u r c h   g e k e n n z e i c h n e t, daß zur Aufnahme und zum Abfließen des Öl-Wasser-Gemisches zumindest eine mit Ausnehmungen versehene schiefe Ebene (18 bzw. 20 bzw. 22 bzw. 24) mit einem tropfnassen Öl abweisenden Vlies versehen ist und daß aus dem Wasser abgeschiedene Öl und das Wasser jeweils einer getrennten Auslaßöffnung (42 bzw. 46) im Bereich des unteren Endes der schiefen Ebene zuführbar ist.

5. Vorrichtung nach Anspruch 4, d a d u r c h   g e k e n n z e i c h n e t, daß mehrere unter einem spitzen Winkel zueinander verlaufende mit dem Öl abweisenden Vlies (30) versehene schiefe Ebenen (18, 20, 22, 24) übereinander in einem Gehäuse (12) derart angeordnet sind, daß das Öl-Wasser-Gemisch beziehungsweise das abgeschiedene Öl von Ebene zu Ebene fließt, daß das durch das Vlies (30) hindurchgedrungene Wasser am tiefsten Punkt einer jeden Ebene einer Sammeleinrichtung (34, 36, 38, 40, 42) zum Ableiten an eine Auslaßöffnung (42) zuführbar ist und daß am tiefsten Punkt der untersten Ebene (24) das abgeschiedene Öl gesammelt und abführbar ist.

- 4 -

6. Vorrichtung nach Anspruch 4 und/oder Anspruch 5, dadurch gekennzeichnet, daß unterhalb einer jeden Ebene (18, 20, 22, 24) jeweils ein Behälter (32) zum Auffangen des Wassers angeordnet ist und jeweils im Bereich des tiefsten Punktes eine Öffnung aufweist, die mit vertikal verlaufenden Schächten (34, 36) verbunden ist, durch die das Wasser einem das Vlies aufweisenden geneigten Nachfilter (38) zuführbar ist, dessen Neigungswinkel gegenüber denen der Ebenen (18, 20, 22, 24) um 90° gedreht ist, und daß nach Durchdringen des Nachfilters (38) das Wasser der Auslaßöffnung (42) zuführbar ist.

7. Vorrichtung nach Anspruch 6, dadurch gekennzeichnet, daß das von dem Nachfilter (38) gewonnene Öl in einer Sammelrinne auffangbar ist.

8. Vorrictung nach zumindest einem der vorhergehenden Ansprüche, dadurch gekennzeichnet, daß die Neigung jeder Ebene (18, 20, 22, 24) beziehungsweise des Nachfilters (38) zwischen 1° und 4°, vorzugsweise 2° gegenüber der Horizontalen ist.

9. Vorrichtung nach zumindest Anspruch 4, d a d u r c h g e k e n n z e i c h n e t, daß die Gehäuseoberseite einen Ansatzstutzen (16) für eine Verbindung mit dem Auffangbehälter aufweist.

10. Vorrichtung zur Durchführung des Verfahrens nach Anspruch 3, zum Abscheiden von Öl aus einem Öl-Wasser-Gemisch, welches mittels einer durch einen geschlossenen Kreislauf betreibbaren Wasserstrahlpumpe in einem vom Kreislauf getrennten Auffangbehälter sammelbar ist, d a d u r c h g e k e n n z e i c h n e t, daß der Sammelbehälter (50) im oberen Randbereich einen trichterförmigen und Ausnehmungen aufweisenden, bei gefülltem Sammelbehälter in das Gemisch (52) eintauchenden Einsatz (54) aufweist, der behälterinnenseitig mit einem Wasser abweisenden und Öl durchlassenden Vlies (58) versehen ist, und daß ein Saugrohr (62) einer Pumpe (60) zum Absaugen des Öls im Abstand zum tiefsten Punkt des trichterförmigen Einsatzes (54) angeordnet ist.

- 6 -

11. Vorrichtung nach Anspruch 10,

    d a d u r c h   g e k e n n -
    z e i c h n e t ,

    daß der Einsatz (54) mit einem als Verschluß für den Behälter (50) geeigneten
    Deckel (64) versehen ist, in dem mittig
    oberhalb des trichterförmigen Einsatzes
    (54) die vorzugsweise von Hand zu betätigende Pumpe (60) angeordnet ist.

12. Vorrichtung nach Anspruch 10 und/oder An-
    spruch 11,

    d a d u r c h   g e k e n n -
    z e i c h n e t ,

    daß der Sammelbehälter (50) ein Normfaß
    ist.

# FIG.1

FIG.2

0017192

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 377 218 (AKZO N.V.) <br><br> * Patentansprüche 1,2,4,5,6; Figur 1; Seite 2, Zeile 27 - Seite 3, Zeile 5; Seite 5, Zeile 34 - Seite 6, Zeile 18; Beispiel 1 * | 1,2,4, 5,8 |
| X | US - A - 2 758 720 (W.J.D. VAN DIJCK) <br><br> * Figuren 1-3; Patentansprüche 1, 3,4,7; Spalte 1, Zeilen 21-28; Spalte 1, Zeile 67 - Spalte 2, Zeile 30; Spalte 2, Zeilen 62-68 * | 1,2,4, 5,9 |
| X | GB - A - 657 715 (FRAM CORP.) <br><br> * Figuren 1-3; Patentansprüche 1, 2,7,8,9; Seite 1, Zeilen 55-63; Seite 2, Zeilen 90-118; Seite 3, Zeilen 78-116 * | 1,2,4, 5 |
| X | DE - A - 2 051 439 (MINNESOTA MINING AND MANUFACTURING CO.) <br><br> * Figuren 1-4; Patentansprüche 1,10; Seite 1, Zeilen 1-11; Seite 8, Zeile 12 - Seite 9, Zeile 15 * | 3,10 |
|  | FR - A - 2 095 575 (T.R.W. INC.) <br><br> * Figuren 4,9; Patentansprüche 1, 3,4,5,7,8,12,16,17,19; Seite 3, ./. | 3,10 |

### KLASSIFIKATION DER ANMELDUNG (Int.Cl. 3)

C 02 F 1/40
B 01 D 17/02

### RECHERCHIERTE SACHGEBIETE (Int. Cl. 3)

B 01 D 17/02
17/04
17/08
17/10
C 02 F 1/40
E 02 B 15/04

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 01.07.1980 | HOORNAERT |

EPA form 1503.1  06.78

Europäisches
Patentamt

**EUROPÄISCHER RECHERCHENBERICHT**

Nummer der Anmeldung

EP 80 10 1676
-2-

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | Zeilen 16-20; Seite 16, Zeile 29 - Seite 17, Zeile 6 * | | |
| | -- | | |
| | <u>DE - A - 2 341 209</u> (H. BECHT) | 3,10,11 | |
| | * vollständiges Dokument * | | |
| | -- | | |
| | <u>US - A - 3 901 811</u> (W.C. FINCH) | 3,10 | |
| | * Figuren 2,2A,4,5; Spalte 3, Zeilen 10-34; Spalte 5, Zeilen 7-14; Spalte 6, Zeilen 7-18 * | | RECHERCHIERTE SACHGEBIETE (Int.Cl. ³) |
| | -- | | |
| D/A | <u>DE - A - 2 758 038</u> (CREMA E.) | | |
| A | <u>US - A - 1 536 911</u> (W.W. NUGENT) | | |
| A | <u>GB - A - 320 239</u> (LIQUID MEASURE-MENTS LTD.) | | |
| | ------ | | |

EPA Form 1503.2   06.78